Europäisches Patentamt

European Patent Office    (11) Publication number:    **0 358 207**

Office européen des brevets    **A2**

(12)    **EUROPEAN PATENT APPLICATION**

(21) Application number: 89116488.1    (51) Int. Cl.⁵: **G05B 19/18**

(22) Date of filing: 07.09.89

(30) Priority: 08.09.88 JP 225329/88
    28.06.89 JP 165758/89

(43) Date of publication of application:
    14.03.90 Bulletin 90/11

(84) Designated Contracting States:
    AT DE ES FR GB IT LU NL SE

(71) Applicant: OMI KOGYO CO., LTD.
    32, Shindenbata Shinden-cho
    Anjo-shi Aichi-ken(JP)

(72) Inventor: Takiizumi, Yoshihiko
    Omi Kogyo Co., Ltd. 32, Shindenbata
    Shinden-cho
    Anjo-shi Aichi-ken(JP)

(74) Representative: Vetter, Ewald Otto et al
    Patentanwaltsbüro Allgeier & Vetter
    Bahnhofstrasse 30 Postfach 102605
    D-8900 Augsburg(DE)

(54) An apparatus and a method for forming boring tools.

(57) A method wherein a work (W) of a cylindrical shape is rotated around it axial center, and at least either the work (W) or a grindstone (10) is moved in the axial direction of the work (W) while at least either the work (W) or the grindstone (10) is reciprocated in the diametral direction of the work (W). This method comprises a step for storing relative moving distances of the work (W) and of the grindstone (10) in the diametral direction and in the axial direction as moving distance data according to rotation angle positions of the work (W), a step for rotating the work (W), a step for detecting the rotation angle positions of the work (W); and a step for moving the work (W) and the grindstone (10) relatively to each other accoridng to the moving distance data corresponding to the detected rotation angle positions of the work (W).

FIG. 1

# An apparatus and a method for forming boring tools

## FIELD OF THE INVENTION

The present invention relates to an apparatus and a method for forming boring tools such as a reamer, a drill, a burnishing drill and so on.

## DESCRIPTION OF THE RELATED ART

Generally, a method for forming a boring tool, for example a reamer having a plurality of cutting edges of spiral shape, is to contact a grindstone while spinning against a turning work and to move the grindstone relative to the work along an axial direction of the work. In this method, a reamer of desirable shape can be formed by making spiral flutes on a periphery of said work.

A method for forming another reamer having two kinds of straight cutting edges, in which distances between land surfaces of the cutting edges and an axial center are different from each other, is, in addition to the above method, to change contacting positions of the grindstone against the work by operation of a cam.

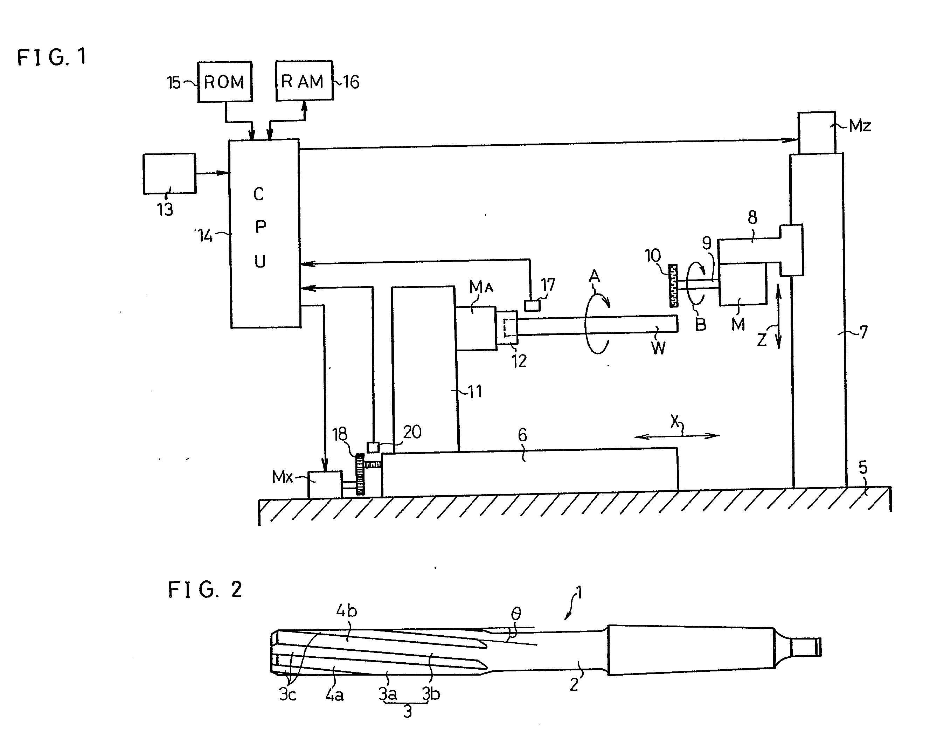

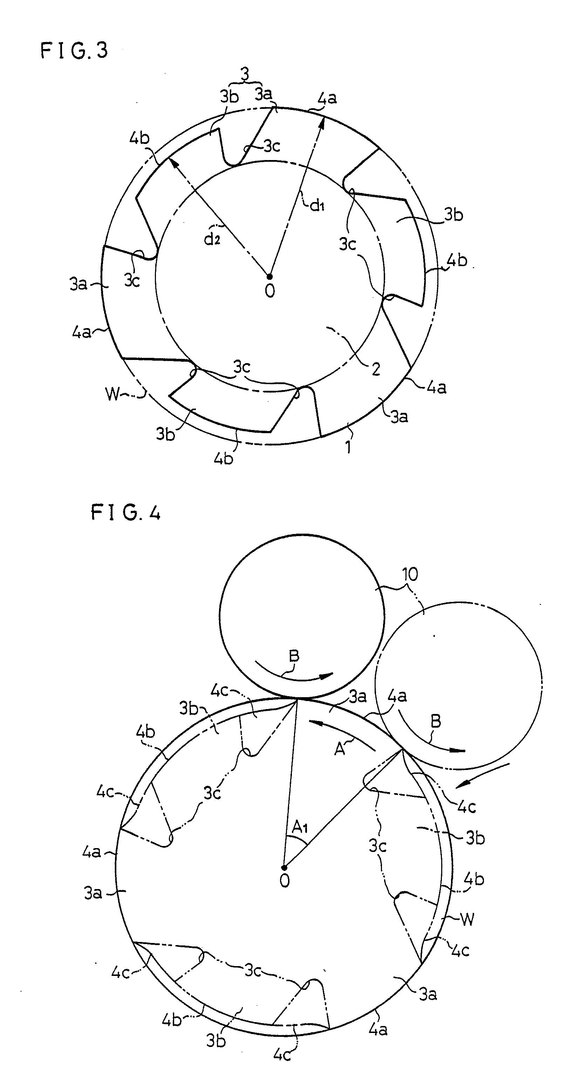

Shapes of the reamers which can be formed in both said methods are, however, limited. For instance, as shown in Figs. 2 and 3, it is very difficult to form a reamer 1 of a complicated shape, which has a cutting edge 3a of large diameter and a cutting edge 3b of small diameter wherein distances d1 and d2 between land surfaces 4a and 4b of the cutting edges 3a and 3b and an axial center O are different from each other and also each of cutting edges 3a and 3b has a spiral shape.

As one kind of boring tools, a burnishing drill 21 shown in Figs. 20 and 21 has been suggested. As for this burnishing drill 21, a pair of drill flutes 23 for removing cut chips are formed in a periphery of a cylindrical shaft body 22 so as to extend substantially parallel to an axial center J of the shaft body 22, and two pairs of reamer flutes 24 for providing a coolant are formed between both the drill flutes 23 so as to extend parallel to these drill flutes 23. First, second, and third lands 25, 26, and 27 for pressing on an inner surface of a hole made by this burnishing drill 21 are arranged on the periphery of the shaft body 22 respectively behind each drill flute 23 and each reamer flute 24 in the direction of cutting rotation K of the shaft body 22. A flank 28 is formed on a rear half, in the direction of cutting rotation K of the shaft body 22, of each of second and third lands 26 and 27.

A head top portion 29 of substantially conical shape is placed at a tip side of said shaft body 22. At the head top portion 29, a web thinning E is formed on one edge end of both edge ends which are in series of each drill flute 23, and a main cutting blade 31 is formed on the other edge end. Said main cutting blade 31 comprises first, second, and third cutting portions 31a, 31b, and 31c continuously formed successively from an apex 32 of the head top portion 29 to a peripheric corner 33 of the shaft body 22.

First, second, and third flanks C, B1, and A are located respectivley behind the first, second, and third cutting portions 31a, 31b, and 31c in the direction of cutting rotation K of the shaft body 22, and a conical surface B2 is additionally formed behind the second flank B1. A stage H having a little smaller diameter than an outer diameter of the shaft body 22 is formed at a tip side of each first land 25 made on said shaft body 22, and chamfer stages D1 and D2 are formed at tip portions of the second and third portions 26 and 27.

Each of portions A to E of the head top portion 29 of the burnishing drill 21 so constituted as described above are formed by a tool forming apparatus such as a tool grinding machine and so on. Namely, forming steps of the portions A to E are performed on the work while changing positions, in a predetermined order, of a grindstone of the forming apparatus relative to the work to be formed into the burnishing drill 21, so that the desirable burnishing drill 21 can be achieved.

The head top portion 29 of the burnishing drill 21 has a complicated shape including the first, second, and third flanks C, B1, and A, the conical surface B2, the chamfer stages D1 and D2, and the web thinning E or the like. Accordingly, when each of the portions A to E at the tip of the burnishing drill 21 is formed by a tool grinding machine in which positions of the work and of the grindstone are changed manually, there is a problem that it is difficult to exactly adjust the relative positions of the work and of the grindstone.

On the contrary, when a NC grinding machine in which the grinding machine is controlled by numeric values in stead of manual operation is used, the relative positions of said work and grindstone can be accurately adjusted. A NC grinding machine is, however, generally expensive, so that there may be another problem that a manufacturing cost of a burnishing drill 21 has to be higher.

SUMMARY OF THE INVENTION

An object of the present invention is to provide a method for forming boring tools in which a variety of booring tools of desirable and complicated shapes can be surely formed with easy operations.

Another object of the present invention is to provide a method and an apparatus for forming boring tools in which the relative positions of a work and of a grindstone can be accuratley adjusted with easy manual operations to form boring tools of previously designed shapes even when boring tools of complicated shapes have to be manufactured.

In order to achieve the above objects, a method, of the present invention, for forming boring tools wherein a work of a cylindrical shape is rotated around its axial center and at least either the work or grinding means is moved in the axial direction of the work while at least either the work or the grinding means is reciprocating in the diametral direction of the work, comprises a step for storing the relative moving distance of the work and of the grinding means in the diametral direction and the relative moving distance of the work and of the grinding means in the axial direction as moving distance data according to the rotation angle positions of the work, a step for rotating the work, a step for detecting the rotation angle positions of the work, and a step for moving the work and the grinding means relatively to each other according to the moving amount data corresponding to the detected rotation angle positions of the work

Other objectives of the present invention will become apparent with an understanding of the embodiments discussed later, and the appended claims. Further, many advantages not mentioned in this specification will become obvious to one skilled in the art upon application of the present invention.

BRIEF DESCRIPTION OF THE DRAWINGS

Figs. 1 to 7 show a first embodiment of the present invention,
Fig. 1 is a diagramatic explanation view of a forming apparatus,
Fig. 2 is a front view of a reamer,
Fig. 3 is a side view of the reamer,
Figs. 4 to 6 show operating states of the forming apparatus,
Fig. 4 is a diagramatic sectional view showing a state of forming a land surface of a cutting edge of large diameter out of a work,

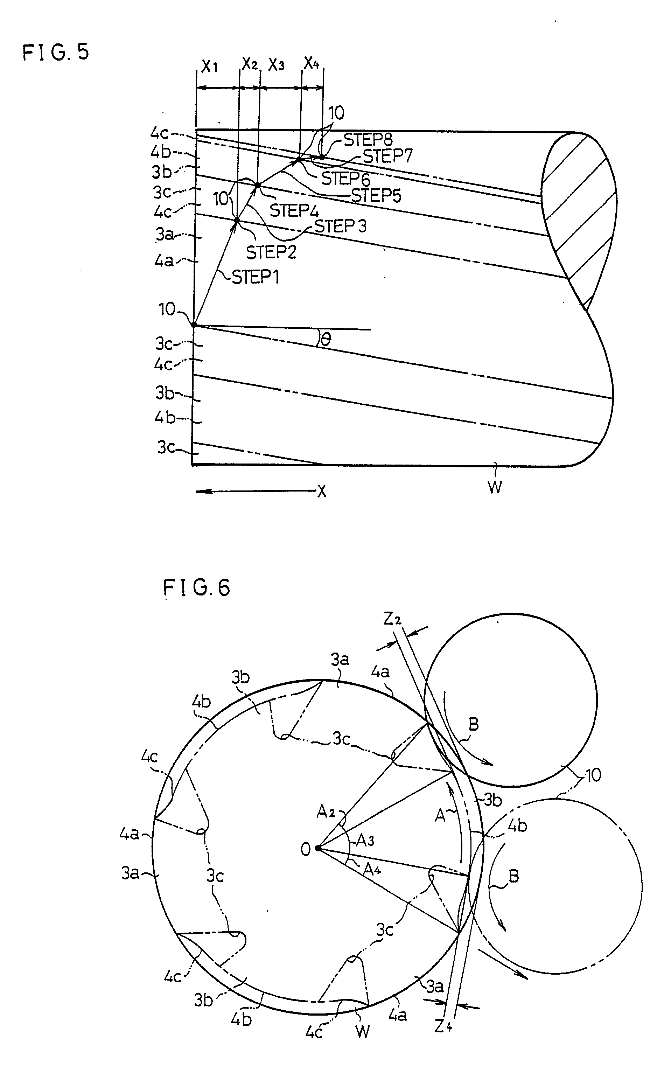

Fig. 5 is a diagramatic side view showing positions of the work relative to a grindstone,
Fig. 6 is a diagramatic sectional view showing a state of forming a land surface of a cutting edge of small diameter out of the work,

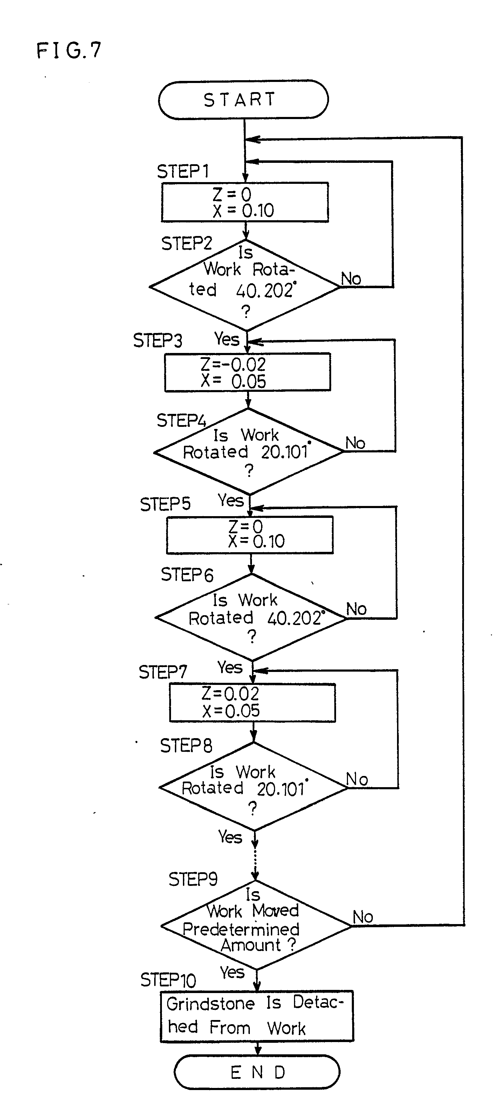

Fig. 7 is a flowchart for explaining the operation of the forming apparatus,

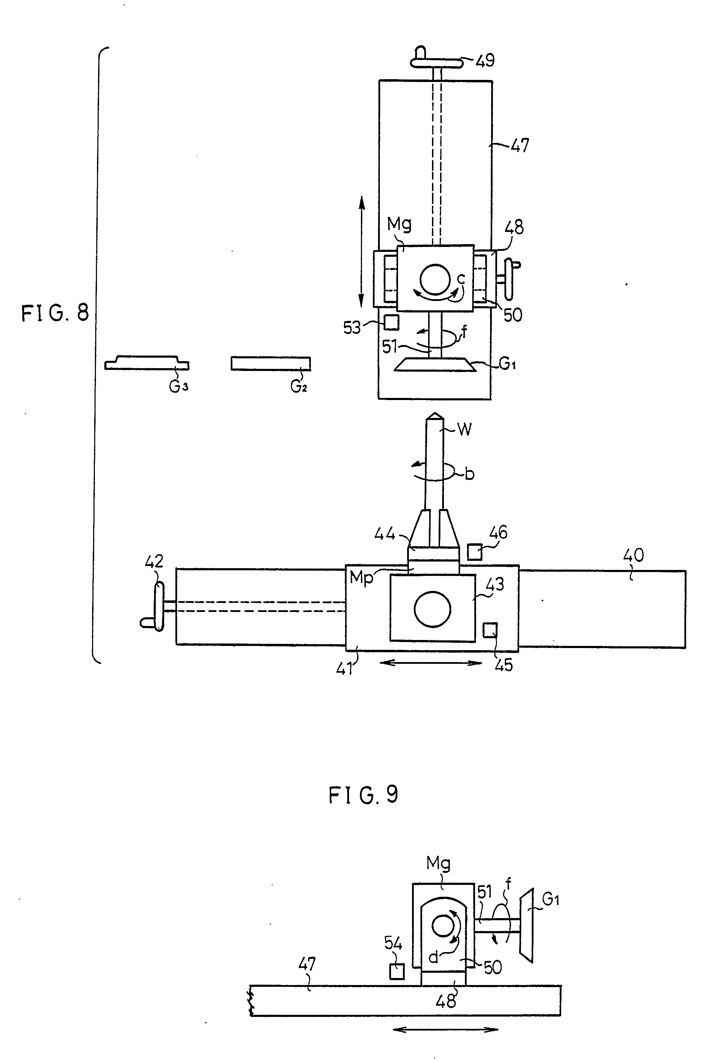

Figs. 8 to 19 show a second embodiment of the present invention,
Fig. 8 is a diagramatic plan view of an apparatus for forming boring tools,
Fig. 9 is a diagramatic side view of a grindstone stand,

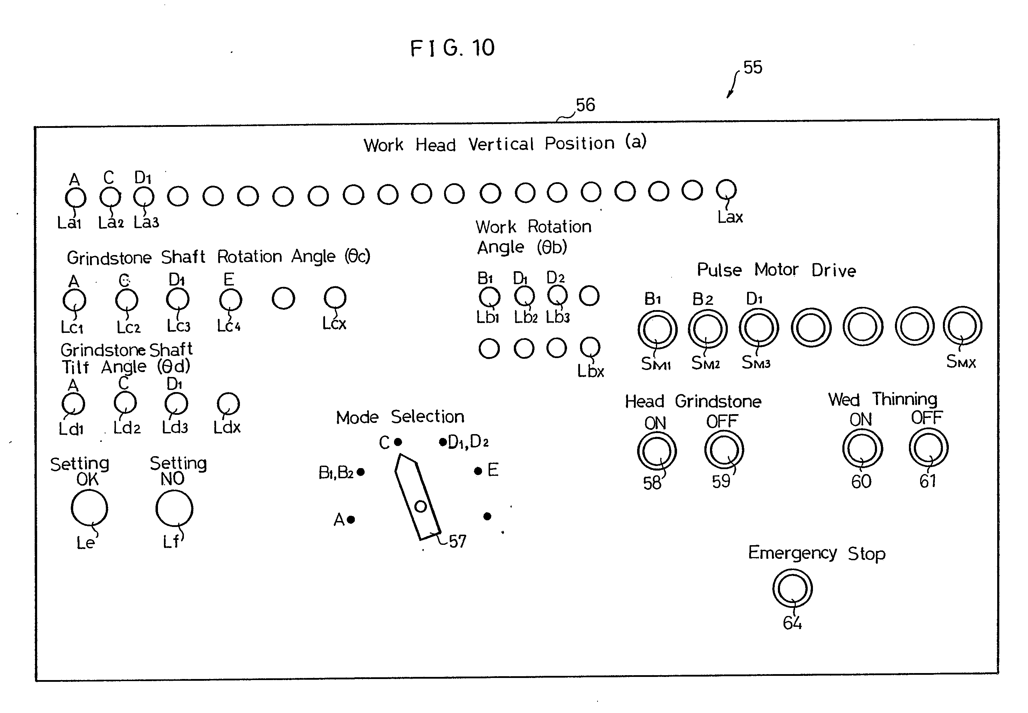

Fig. 10 is a front view of a panel of a control board,

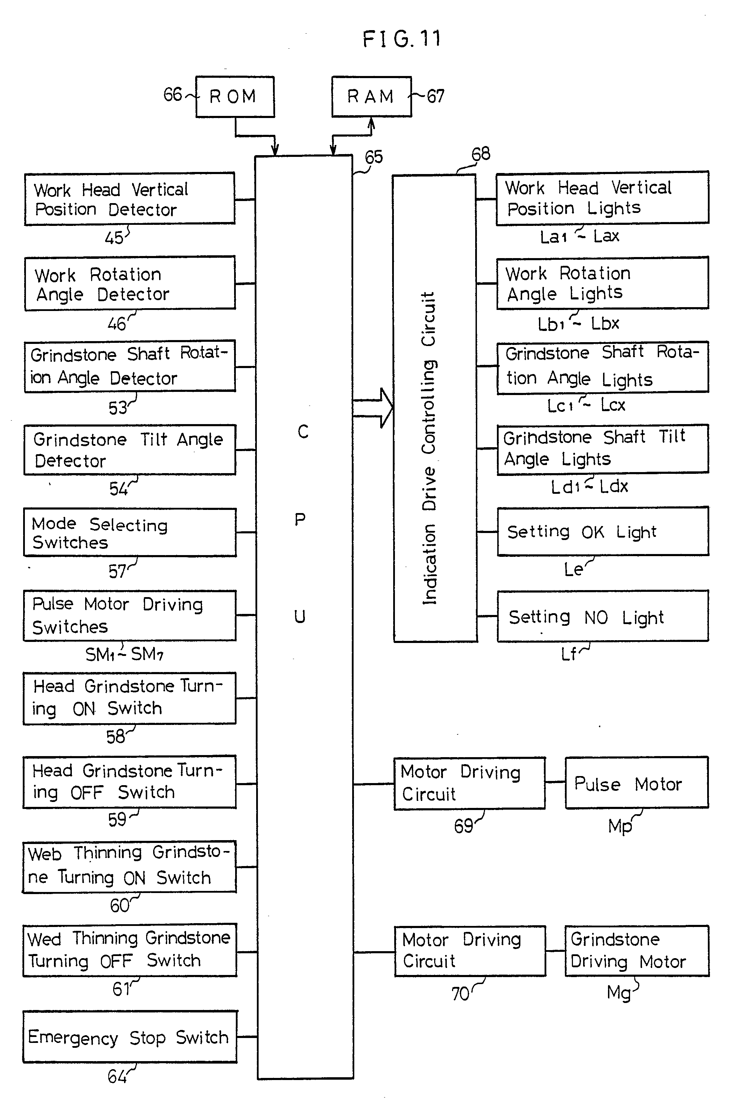

Fig. 11 is an electrical circuit block diagram showing an electrical formation of the apparatus for forming boring tools,

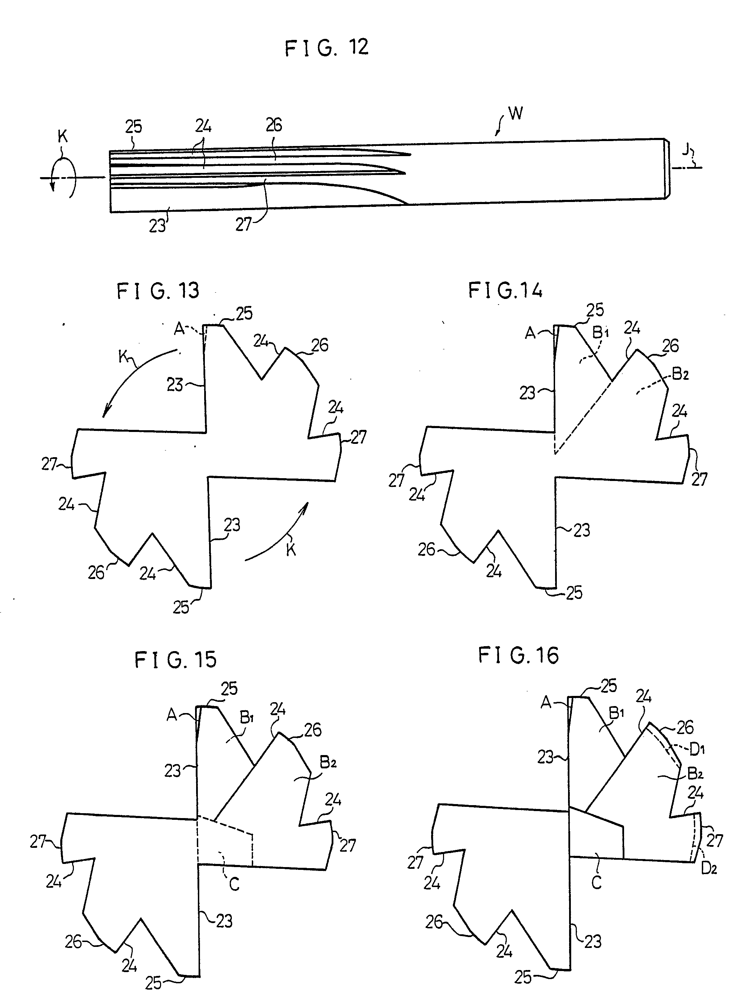

Fig. 12 is a front view of a work,
Fig. 13 is a plan view of the work,
Figs. 14 to 17 are plan views showing that each portion is formed successively on a tip of the work,

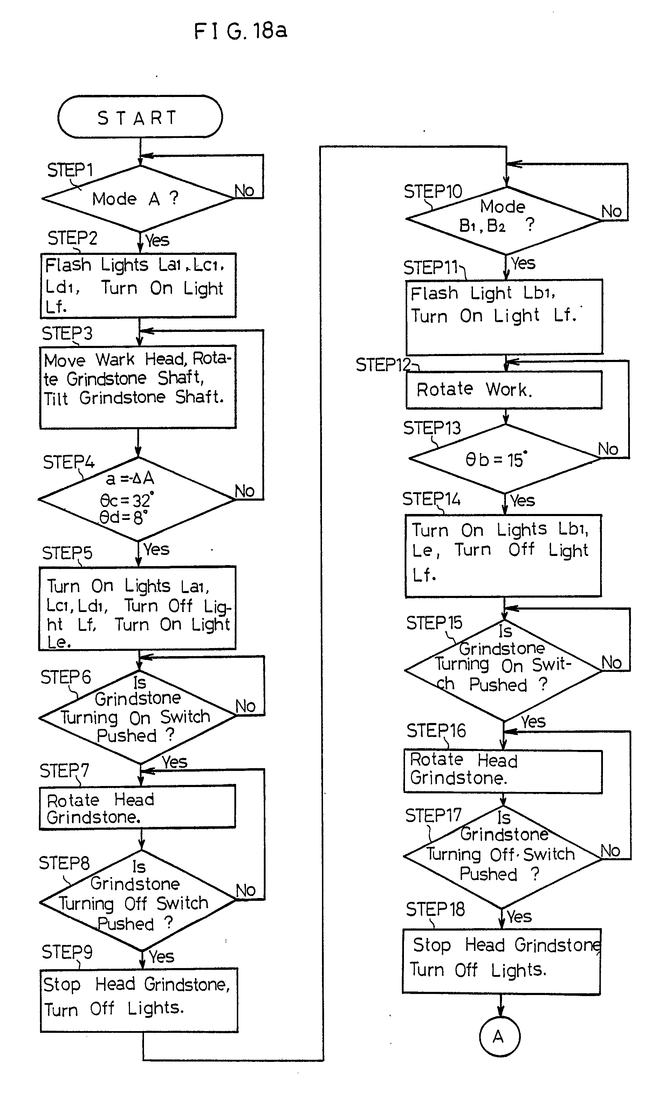

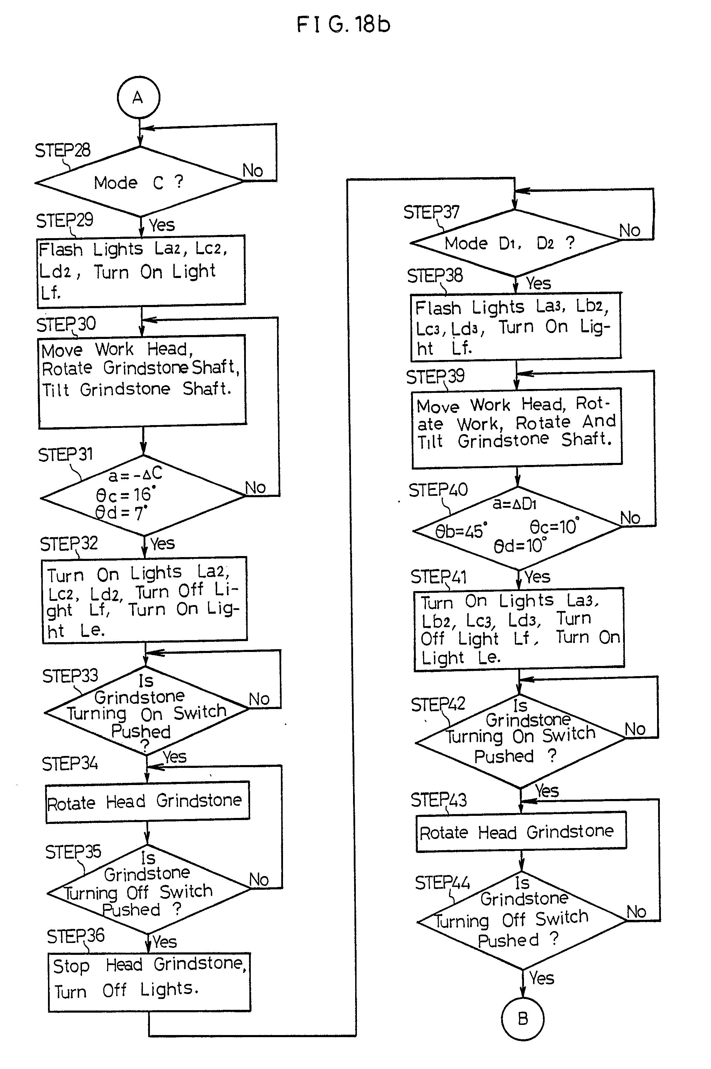

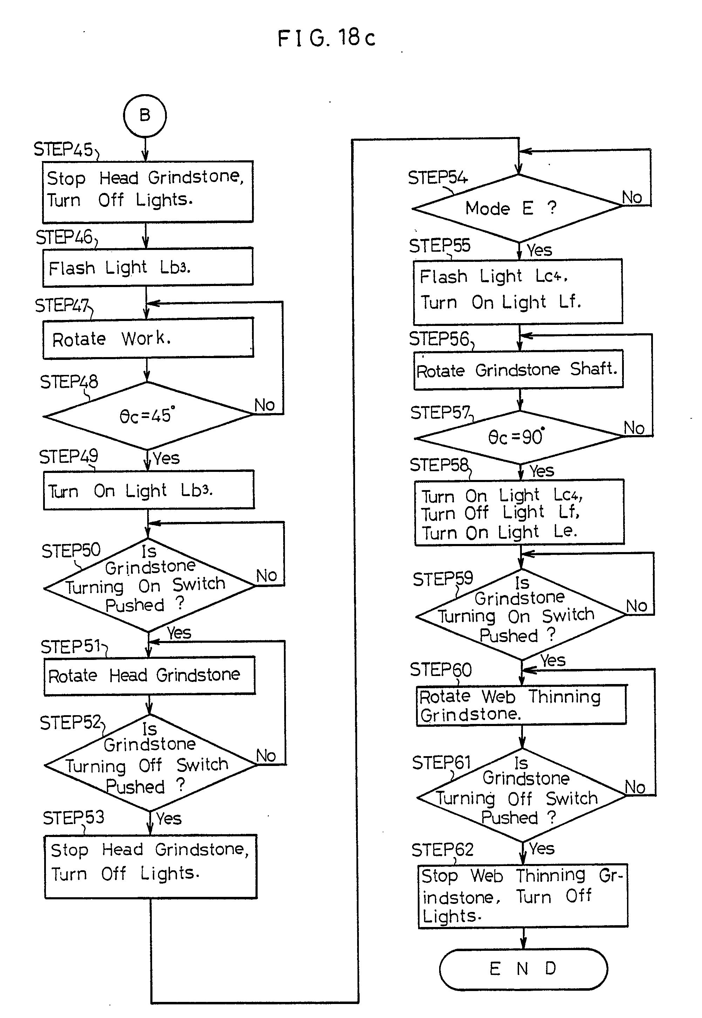

Figs. 18(a) and 18 (b) are flowcharts showing ways of forming each part of the tip of the work by using the forming apparatus,

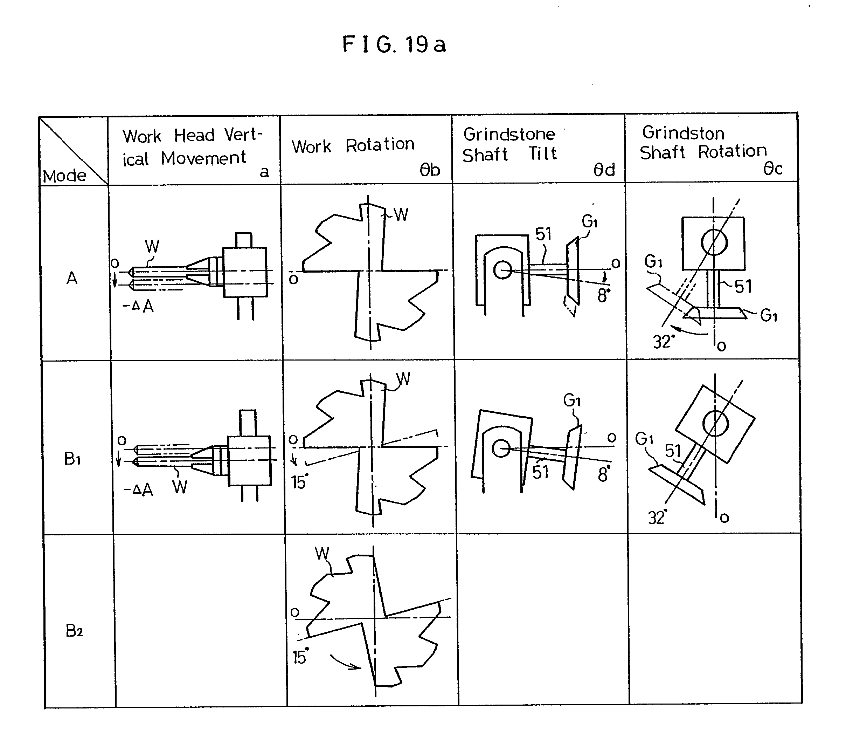

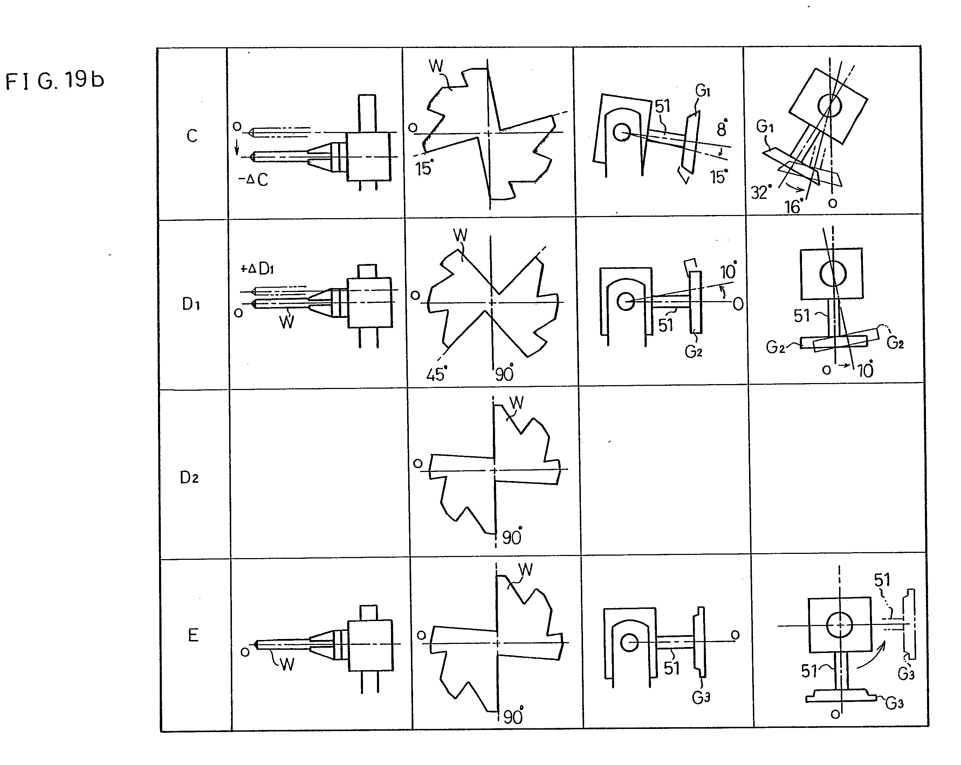

Fig. 19 is a step explanation view showing a relationship of relative positions of the work and the grindstone in each step,
Fig. 20 is a plan view of a burnishing drill formed by a boring tool, and
Fig. 21 is a partially broken front view of a tip of the burnishing drill.

DESCRIPTION OF THE PREFERRED EMBODIMENTS

A method, for forming a reamer as a boring tool, of a first embodiment of the present invention is now described hereinafter referring to Figs. 1 to 7.

In the first place, an outline of a forming apparatus of the present embodiment will be described below. As shown in Fig. 1, a table 6 is arranged on a base 5. This table 6 is connected with a motor Mx as movement driving means arranged on said base 5 via a rotation transferring mechanism 18 such as a ball screw and so on, and is movable in the X direction (in the axial direction of a work W described below) by means of the motor Mx. A rotation speed of the motor Mx can be optionally set and changed.

On said table 6 is mounted a main shaft stand 11 standing upright to which a motor MA is attached as second rotation driving means. A rotation speed of a rotation shaft of this motor MA can be optionally set and changed. Into a chuck 12 connected with the rotation shaft is fitted a work W of a bar shape, which is to be formed into a reamer 1, being rotatable in the direction of an arrow A. A photoelectric rotary encoder 17 as an angle position detecting means to detect an angle position of the work W is attached to said motor MA.

A grindstone stand 7 is mounted on the base 5 standing upright adjacent to said table 6, and a motor M as first rotation driving means is mounted on the grindstone stand 7 via a mounting member 8. This motor M is connected with a motor Mz as reciprocation driving means mounted on the grindstone stand 7 via a not shown rotation tranferring mechanism, and is able to reciprocate in the Z direction (in the diametral direction of said work W). A reciprocating amount of the motor M and a rotation speed of a rotation shaft 9 thereof can be optionally set and changed.

A grindstone 10 of a disc shape is attached to the rotation shaft 9 of the motor M and is rotatable in the direction of an arrow B. The grindstone 10 moves vertically in accordance with reciprocating motions of said motor M and comes into contact with said work W, so that this work W may be ground into a desirable shape such as the reamer 1.

A moving speed of said table 6, namely the rotation speed of the motor Mx is determined based upon a rotation speed of the work W, namely the rotation speed of the motor MA. In the present embodiment, a resolver 20 is attached to said rotation transferring mechanism 18. The resolver 20 works as moving distance detecting means to perform feedback control by detecting whether the rotation speed of said motor Mx is following and responding to the rotation speed of the motor MA or not when the rotation speed of the motor MA is changed according to a change of a shape of a boring tool and so on.

Said motors Mx and Mz are connected with output sides of a central processing unit (referred as a CPU hereinafter) 14 as control means. With input sides of this CPU 14 are respectively connected said resolver 20, the rotary encoder 17, and a key board 13 as deta inputting means for inputting processing deta to form the work W into a reamer. Said CPU 14 includes a ROM 15 storing a control program and a RAM 16 as storing means for storing the processing data inputted by said key board 13.

The CPU 14 makes the grindstone 10 form the reamer 1 by controlling reciprocating positions, relative to the diametral direction Z of the work W, of the grindstone 10 according to the processing data stored in said RAM 16 and to detecting signals of angle position of the work W detected by the rotary encoder 17.

A method for forming a boring tool using the forming apparatus constituted as described above is now described hereinafter.

A reamer 1 formed in the method of the present embodiment comprises a main body 2 and six pieces of cutting edges 3 integrally formed on a periphery of the main body 2 at predetermined intervals. These cutting edges 3 are so constituted that cutting edges 3a of large diameter and cutting edges 3b of small diameter are arranged one after another wherein distances d1 and d2 between an axial center O of the main body 2 and land surfaces 4a and 4b are different from each other as shown in Figs. 2 and 3, and the difference between both distances d1 and d2 is set 0.02 mm in the present embodiment. Flutes 3 are formed on the reamer 1 between both kinds of cutting edges 3a and 3b. Said cutting edges 3a and 3b of large and small diameters are formed spiral so as to be twisted in a helix angle θ (10 degrees in the present embodiment) in the same direction as a rotating direction of the reamer 1.

A method for forming the land surfaces 4a and 4b of the reamer 1 of the above shape into which the work W is processed to be ground is now described hereinafter referring to a following Table and Figs 4 to 7. In the Table, X represents a moving distance of the work W in the horizontal direction, Z represents a moving distance of the grindstone 10 in the vertical direction, and A represents a rotation angle of the work W. Data for the above purpose are stored in the RAM 16. Figs. 4 to 6 are to explain the reciprocating positions of the grindstone 10 relative to the rotation angle positions of the work W, and these are illustrated as if the grindstone 10 moved in the circumferential direction. In Fig. 5, contact portions of the grindstone 10 with the work W are shown as dots.

Table

| No. | X(mm) | Z(mm) | A(degree) |
|---|---|---|---|
| 1 | X1 :0.10 | Z1 : 0 | A1 :40.202 |
| 2 | X2 :0.05 | Z2 :-0.02 | A2 :20.101 |
| 3 | X3 :0.10 | Z3 : 0 | A3 :40.202 |
| 4 | X4 :0.05 | Z4 : 0.02 | A4 :20.101 |
| 5 | X5 :0.10 | Z5 : 0 | A5 :40.202 |
| 6 | X6 :0.05 | Z6 :-0.02 | A6 :20.101 |
| 7 | X7 :0.10 | Z7 : 0 | A7 :40.202 |
| 8 | X8 :0.05 | Z8 : 0.02 | A8 :20.101 |
| 9 | X9 :0.10 | Z9 : 0 | A9 :40.202 |
| 10 | X10:0.05 | Z10:-0.02 | A10:20.101 |
| 11 | X11:0.10 | Z11: 0 | A11:40.202 |
| 12 | X12:0.05 | Z12: 0.02 | A12:20.101 |

Firstly, a not shown start switch is pressed to rotate the work W in the direction of the arrow A and the grindstone 10 in the direction of the arrows B both shown in Fig. 4 and to move the work W in the direction of the arrow X shown in Fig. 5.

As shown as solid lines in Fig. 4, after the CPU 14 reads data No. 1 out of the RAM 16, the grindstone 10 is made come to contact with the periphery of the work W according to these data. It is supposed that the contact portion of the grindstone 10 with the work W is a starting point $(X, Z, A) = (0, 0, 0)$. Namely, the CPU 14 keeps the grindstone 10 at a $Z1 = 0$ state and moves the work W in X1 (0.10 mm) while the work W rotates in A1 (40.202 degrees) from the starting point ( step 1). Accordingly, the grindstone 10 grinds the periphery of the work W and forms the land surfaces 4a of the cutting edges 3a of large diameter.

After the rotary encoder 17 detects that the work W rotates in A1, namely, to a position shown as two-dot chain line in Fig. 4 ( step 2), the CPU 4 reads data No. 2 out of the RAM 16 according to the detection signal . The CPU 14 then moves the grindstone 10 in Z2 (-0.02 mm) in the inward direction of the radius of the work W and moves the work W in X2 (0.05mm) while the work W is rotated in A2 (20.101 degrees) ( step 3). Accordingly, the grindstone 10 grinds a portion corresponding to the flute 3c between the cutting edge 3a of large diameter and the cutting edge 3b of small diameter of the reamer 1 on the work W and forms a land surface 4c of the flute 3c.

After the rotary encoder 17 detects that the work W is rotated in A2 ( step 4), the CPU 14 reads data No. 3 out of the RAM 16 according to the detection signal . The CPU 14 keeps the grindstone 10 at said position (Z3 = 0) while the work W is rotated in A3 (40.202 degrees) according to these No. 3 data. On the other hand, the CPU 14 moves the work W in X3 (0.10 mm) while said work W is rotated in A3 ( step 5). Accordingly, the grindstone 10 grinds a portion corresponding to the cutting edge 3b of small diameter of the reamer 1 on the work W and forms the land surface 4b of the cutting edge 3b.

After the rotary encoder 17 detects that the work W is rotated in A3 ( step 6), the CPU 14 reads data No. 4 out of the RAM 16 according to the detection signal . The CPU 14 moves the grindstone in Z4 (0.02 mm) in the outward direction of the radius of the work W and moves the work W in X4 (0.05 mm) while the work W is rotated in A4 (20.101 degrees) according to these data No. 4 ( step 7). Accordingly, the grindstone 10 grinds a portion corresponding to the flute 3c between the cutting edge 3a of large diameter and the cutting edge 3b of small diameter of the reamer 1 on the work W and forms the land surface 4c of the flute 3c.

After the rotary encoder 17 detects that the work W is rotated in A4 ( step 8), the CPU 14 reads data No. 5 out of the RAM 16 accoridng to the detection signal . The CPU 14 keeps the grindstone 10 at said position (Z4) and moves the work W in X5 (0.10 mm) while the work W is rotated in A5 (40.202 degrees) according to these No. 5 data. Accordingly, the grindstone 10 grinds a portion corresponding to the cutting edge 3a of large diameter of the reamer 1 on the work W and forms the land surface 4a of the cutting edge 3a. When the step 8 is finished as described above, the apparatus is in the same state as the step 1, namely the land surface 4a of the cutting edge 3a of large diameter is formed.

When three cycles of the steps 1 to 8 are completed, the work W has made one turn (361.818 degrees) and has moved in 0.9 mm in the longitudinal direction thereof. The reason why one turn of the work W is more than 360 degrees is that the desirable cutting edges 3a of large diameter and cutting edges 3b of small diameter are twisted in the helix angle θ.

The work W is ground while moving in the longitudinal direction by repeating the same procedure described above. This grinding continues until the work W is moved in a predetermined distance in the longitudinal direction ( step 9). After the work W is moved in the predetermined distance, formed are the land surfaces 4a, 4b, and 4c of the cutting edges 3a of large diameter, of the cutting edge 3b of small diameter, and of the flute 3c.

After said land surfaces 4a, 4b, and 4c are formed, the grindstone 10 is detached from the work W ( step 10) and the forming apparatus is stopped. Portions, corresponding to the flutes 3c, on the work W are cut by a milling cutter used in a cutting apparatus different from this forming apparatus. Thus formed is the desirable reamer 1 shown in Figs. 2 and 3.

As described above, in the forming method of the present embodiment, the land surfaces 4a and 4b of the reamer 1 of complicated shape which has the cutting edges 3a of large diameter and the cutting edges 3b of small diameter, which are both formed torsional, are accurately and surely cut into the desirable shapes. Just operating the key board 13 each time can correspond to cutting reamers having shapes and sizes different from the reamer 1 of said embodiment. Accordingly, a troublesome procedure to change cams or so is not necessary, which is required in forming methods of related art in which cams are used.

In said embodiment, the grindstone is reciprocated in the direction of the radius of the work W and grinds the work W, but the work W can also be reciprocated to come to contact with the grindstone 10, or both the grindstone 10 and the work W can be reciprocated to come to contact with each other, so that the reamer 1 may be formed. In said embodiment, the table 6 is moved in the horizontal direction, but the grindstone can be moved in the same direction, or both can be moved relative to each other.

In addition, other than the reamer 1, various kinds of boring tools of complicated shapes such as a drill and so on can be processed to be ground in the forming method of the present embodiment.

In said embodiment, after the land surfaces 4a and 4b of the reamer 1 are formed by the forming apparatus in which a material of bar shape is used as the work W, the flutes 3c are cut, but the land surfaces 4a and 4b can also be formed by the forming apparatus utilizing the work W on which the flutes 3c have already been formed.

[A Second Embodiment]

A forming apparatus, for forming a burnishing drill as a boring tool, of the second embodiment of the present invention is now described hereinafter referring to Figs. 8 to 21.

As shown in Fig. 8, a main shaft stand 41 is fitted on a first slide table 40 extending in the crosswise direction. This main shaft stand 41 slides on the first slide table 40 via transferring mechanism (not shown) such as a ball screw or the like by rotating an operation handle 42 attached on the first slide table 40. A work head 43 is arranged on the main shaft stand 41 and is movable manually or by means of a motor in the vertical direction (in the crossing direction of the surface of Fig. 8). This work head 43 has a pulse motor Mp, and a work W of a bar shape which is to be formed into a burnishing drill 1 shown in Figs. 20 and 21 is attached to a chuck 44, which is rotated in the direction of an arrow b, connected with the pulse motor Mp.

To said main shaft stand 41 are attached a work head's vertical position detector 45 for detecting a vertical position a of the work head 43 and a work's rotation angle detector 46 for detecting a rotation angle θb position of the work W in the direction of the arrow b, and work's position detecting means for detecting a position of the work W is constituted of both the detectors 45 and 46.

Beside said first slide table 40 is provided a second slide table 47 extending in the direction crossing the first slide table 40 (in the vertical direction in Fig. 8), and a grindstone stand 48 is fitted on this second slide table 47 and is rotatable manually or by means of a motor in the direction of an arrow c. The grindstone stand 48 slides on the second slide table 47 via transferring mechanism (not shown) such as a ball screw and so on by rotating an opration handle 49 mounted on the second slide table 47.

As shown in Figs. 8 and 9, a mounting member 50 is attached on said grindstone stand 48 and is slidable in the direction crossing a grindstone shaft 51 described later. To the mounting member 50 is attached a grindstone driving motor Mg which can be tilted in the direction of an arrow d, and with this grindstone driving motor Mg is connected the grindstone shaft 51 which is rotatable in the direction of an arrow f or in the reverse direction. Any one among head grindstones G1, G2, and a web thinning grindstone G3 is attached to said grindstone shaft 51. The grindstone shaft 51 is rotated in the direction of the arrow f when the head grindstone G1 or G2 is attached, and the grindstone shaft 51 is rotated in the reverse direction of the arrow f when the web thinning grindstone G3 is attached.

In the present embodiment, the head grindstone G1 forms the first, second, and third flanks C, B1, and A and the conical surfaces B2 at a tip part of the work W, the head grindstone G2 forms the chamfer stages D1 and D2, and the web thinning grindstone G3 forms the web thinnings E. To said grindstone stand 48 are attached a grindstone shaft's rotation angle detector 53 for detecting a rotation angle $\theta c$ position of the grindstone shaft 51 in the direction of the arrow c and a grindstone's tilt angle detector 54 for detecting a tilt angle $\theta d$ position of the grindstone shaft 51 in the direction of the arrow d, and grindstone detecting means for detecting relative positions of the work grindstones G1 to G3 is constituted of both the detectors 53 and 54.

A control board 55 for controlling the boring tool forming apparatus of the present embodiment is provided adjacent to both said slide tables 40 and 47 as shown in Fig. 10. A mode selecting switch 57 as mode selecting means is provided on the lower central portion of a panel 56 of this control board 55. One is to be chosen among six forming steps (modes A to E) for forming each of the portions A to E on the work W by turning the mode selecting switch 57.

A number of work head's vertical position lights La1 to Lax for indicating a vertical position of said work head 43 are arranged on an upper portion of said panel 56. In the present embodiment, the light La1 corresponds to a mode A, the light La2 corresponds to a mode C, and the light La3 corresponds to a mode D1. A number of work's rotation angle lights Lb1 to Lbx for indicating a rotation angle $\theta b$ position of the work W are provided at right upper position to the mode selecting switch 57. In the present embodiment, the light Lb1 corresponds to a mode B1, the light Lb2 corresponds to a mode D1, and the light Lb3 corresponds to a mode D2.

Each of the work head's vertical position lights La1 to Lax and of the work's rotation angle light Lb1 to Lbx is in one among three conditions which are on, flashing, or off, and work indicating means for indicating a position of the work W is constituted by these lights La1 to Lax and Lb1 to Lbx.

A number of grindstone shaft's rotation angle lights Lc1 to Lcx for indicating a rotation angle $\theta c$ position of the grind stone shaft 51 are provided at positions left to the mode selecting switch 57 on said panel 56. In the present embodiment, the light Lc1 corresponds to the mode A, the light Lc2 corresponds to the mode C, the light Lc3 corresponds to the mode D1, and the light Lc4 corresponds to the mode E. A number of grindstone shaft's tilt angle lights Ld1 to Ldx for indicating a tilt angle $\theta d$ position of the grindstone shaft 51 are arranged just below said grindstone shaft's rotation angle lights Lc1 to Lcx. In the present embodiment, the light Ld1 corresponds to the mode A, the light Ld2 corresponds to the mode C, and the light Ld3 corresponds to the mode D1.

Each of the grindstone shaft's rotation angle lights Lc1 and Lcx and of the grindstone shaft's tilt angle lights Ld1 to Ldx is in one among three conditions which are on, flashing, or off, and grindstone indicating means for indicating a position of each of the grindstones G1 to G3 is constituted by these lights Lc1 to Lcx and Ld1 to Ldx.

A number of pulse motor driving switches Sm1 to Smx for permitting the pulse motor Mp to be driven in order to turn the work W in a predetermined angle are provided at right side positions to the mode selecting switch 57 on said panel 56. In the present embodiment, the switch Sm1 corresponds to the mode B1, the switch Sm2 corresponds to the mode B2, and the switch Sm3 corresponds to the mode D1. The work W is rotated in 180 degrees by pressing the switch Smx.

A head grindstone turning on switch 58 for starting rotating the head grindstones G1 and G2, which cut each of the portions A to D of the tip of the work W, in the direction of the arrow f and a head grindstone turning off switch 59 for stopping this rotation are provided next to each other below said pulse motor driving switches Sm1 to Smx. A web thinning grindstone turning on switch 60 for starting rotating the web thinning grindstone G3, which cut the web thinning E of the tip of the work W, in the reverse direction of the arrow f and a web thinning grindstone turning off switch 61 for stopping this rotation are arranged next to each other at positions right to the switch 59.

A setting OK light Le and a setting NO light Lf are provided right and left to each other below the grindstone shaft's tilt angle lights LD1 to Ldx on said panel 56. This setting NO light Lf is turned on when said work head's vertical position lights La1 to Lax, the work's rotation angle lights Lb1 to Lbx, the grindstone shaft's rotation angle lights Lc1 to Lcx, and the grindstone shaft's tilt angle lights Ld1 to Ldx are all flashing, and the setting NO light Lf is flashing when all the lights La1 to Lax, Lb1 to Lbx, Lc1 to Lcx, and LD1 to Ldx are on.

An emergency stop switch 64 for stopping the forming apparatus of the present embodiment in case of emergency is arranged at a lower right position of the panel 56.

An electrical configration of the boring tool forming apparatus of the present embodiment is now descirbed hereinafter referring to an electrical circuit block diagram shown in Fig. 11.

A central processing unit (referred to as a CPU hereinafter) 65 as completing control means and control means has a random access memory (RAM) 67 and a read only memory (ROM) as storing means for storing, in advance, positions of the work W and of the grindstones G1 to G3 during the forming steps of each of the portions A to E of said work as position data.

With input sides of the CPU 65 are connected the work head's vertical position detector 45, the work's rotation angle detector 46, the grindstone shaft's rotation angle detector 53, the grindstone shaft's tilt angle detector 54, the mode selecting switch 57, the pulse motor driving switches Sm1 to Smx, the head grindstone turning on switch 58, the head grindstone turning off switch 59, the web thinning grindstone turning on switch 60, the web thinning grindstone turning off switch 61, and the emergency stop switch 64.

With an output side of said CPU 65 are connected an indication drive controlling circuit 68 for driving and controlling the work head's vertical position lights La1 to Lax, the work's rotation angle lights Lb1 to Lbx, the grindstone shaft's rotation angle lights Lc1 to Lcx, the grinstone shaft's tilt angle lights Ld1 to Ldx, the setting OK light Le, and the setting NO light Lf. Motor driving circuits 69 and 70 for driving and controlling the pulse motor Mp and the grindstone driving motor Mg are also connected with the output sides of the CPU 65.

The CPU 65, according to each mode selected out of the modes A to E by said mode selecting switch 57, makes the work head's vertical position lights La1 to Lax, the work's rotation angle lights Lb1 to Lbx, the grindstone shaft's rotation angle lights Lc1 to Lcx, and the grindstone shaft's tilt angle lights Ld1 to Ldx flash corresponding to the mode selected out of the modes A to E, and turns on the setting NO light Lf until the positions of the work W and grindstone G1 to G3 come to correspond to the position data stored in said ROM 66. When the positions of said work W and grindstone G1 to G3 come to correspond to the position data stored in the ROM 66, the CPU 65 turns on said lights La1 to Lax, Lb1 to Lbx, Lc1 to Lcx, and Ld1 to Ldx which have been flashing, turns off the setting NO light Lf, turns on the setting OK light Le, and then make it possible to drive the grindstone driving motor Mg.

A method for forming a burnishing drill by means of the forming apparatus constituted as descirbed above is now described.

A work W used in this forming method has a pair of drill flutes 23 extending substantially parallel to an axial center thereof and two pairs of reamer flutes 24 extending parallel to and between these drill flutes 23 on a periphery of a front half of a bar material as shown in Figs. 12 and 13. First, second, and third lands 25 to 27 are formed behind the drill and reamer flutes 23 and 24 in the direction K of cutting rotation of this work W on the periphery of a shaft body 22.

A method for cutting and processing a tip of said work W and for forming portions A to E successively is now described referring to flowcharts shown in Figs. 18 (a) and (b) and a step explanation diagram shown in Fig. 19. This step explanation diagram shows vertical positions of the work head 43a, rotation angle $\theta b$ positions of the work W, tilt angle $\theta d$ positions of the grindstone shaft 51, and rotation angle $\theta c$ positions of the grindstone shaft 51 respectively.

First of all, the work head 43 and angles of the work W and grindstone shaft 51 are set at positions shown as solid lines in the mode A in Fig. 19. The vertical position of the work head 43 at this time is a standard position, and the angle positions of the work W and grindstone shaft 51 at this time are also standard angle positions. Namely, at this time, the vertical position a of the work head 43 = 0, the rotation angle $\theta b$ of the work W = 0, the tilt angle $\theta d$ of the grindstone shaft 51 = 0, and the rotation angle $\theta c$ of the grindstone shaft 51 = 0. While keeping these positions, a position of the work head 43 on the first slide table 40 and a position of the grindstone stand 48 on the second slide table 47 are set so that the head grindstone G1 might come to contact with the tip of the work W (refer to Figs. 8 and 9).

<A step for forming third flanks A>

When the mode selecting switch 57 is set at the mode A by an operator ( step 1; which is simply referred to as S1 hereinafter, and so are the other steps), the CPU 65 reads processing data for forming the third flank A out of the ROM 66, makes the work head vertical position light La1, the grindstone shaft's rotation angle light Lc1, and the grindstone shaft's tilt angle light Ld1 all flash, and turns on the setting NO light Lf (S2). The operator, thus, sees the lights La1, Lc1, and Ld1 flashing, and then can judge that it is necessary to move the work head 43 and to rotate and tilt the grindstone shaft 51.

When the work head's vertical position detector 45 detects that the work head 43 is rotated in a = $\Delta A$

below from the standard position after the work head 43 is moved manually or by the motor and after the grindstone shaft 51 is rotated and tilted (S3), the CPU 65 turns on the work head's vertical position light La1 according to the above detection signal. Then, when the grindstone shaft's rotation angle detector 53 detects that the grindstone shaft 51 is rotated to the left in $\theta c = 32°$ from the standard angle position, the CPU 65 turns on the grindstone shaft's rotation angle light Lc1 accrording to this detection signal. Moreover, when the grindstone shaft's tilt angle detector 54 detects that the grindstone shaft 51 is tilted in $\theta d = 8°$ below from the standard angle position, the CPU 65 turns on the grindstone shaft's tilt angle light Ld1 according to this detection singal.

When said work head's vertical position light La1, the grindstone shaft's rotation angle light Lc1, and the grindstone shaft's tilt angle light Ld1 are turned on, the CPU 65 turns off the setting NO light Lf and turns on the setting OK light Le (S4 and S5), and then makes it possible to drive the grindstone driving motor Mg. The operator, therefore, sees the lights La1, LC1, Ld1, Le, and Lf flashing, on, or off, and then can make it sure that a relative position of the head grindstone G1 and of the work W is set at an appropriate position.

When the head grindstone turning on switch 58 is pushed by the operator (S6), the CPU 65 drives the grindstone driving motor Mg to rotate the head grindstone G1 (S7). Then, the tip of the work W is cut by the head grindstone G1 to be formed into the third flank A as shown as a broken line in Fig. 13. When the head grindstone turning off switch 59 is pushed (S8) after this third flank A is formed, the CPU 65 stops the rotation of the head grindstone G1 and turns off the work head's vertical position light La1, the grindstone shaft's rotation angle light Lc1, the grindstone shaft's tilt angle light Ld1, and the setting OK light Le which all have been on (S9), and then completes the cutting step for forming the third flank A.

After the third flank A is formed on the work W as described above, the work W is rotated in $180°$ by pushing the pulse motor driving switch Smx, and then the same operation described above is performed. Accordingly, the other third flank A can be formed.

<Steps for forming second flanks B1 and conical surfaces B2>

When the mode selecting switch 57 is set at the modes B1 and B2 by the operator (S10), the CPU 65 reads processing data for cutting the second flank B1 and the conical surface B2 out of the ROM 66, makes the work's rotation angle light Lb1 flash, and turns on the setting NO light Lf (S11). The oeprator can judge, by seeing the light Lb1 flashing, that the work W has to be rotated.

Then, when the pulse motor driving switch Sm1 is pushed by the operator, the CPU 65 drives the pulse motor Mp to be rotated (S12). When the work's rotation angle detector 46 detects that the work W is rotated to the left in $\theta b = 15°$ from the standard angle position (S13), the CPU 65 turns on the work's rotation angle light Lb1, turns off the setting NO light Lf, and turns on the setting OK light Le (S14) according to the detection signal, and then makes it possible to drive the grindstone driving motor Mg. The operator, thus, can see the lights Lb1, Le, and Lf on and off, and then can make it sure that a relative position of the head grindstone G1 and the work W is set at an appropriate position.

When the head grindstone turning on switch 58 is pushed by the operator (S15), the CPU 65 drives the grindstone driving motor Mg to rotate the head grindstone G1 (S16). The tip of the work W is, then, cut by the head grindstone G1 to be formed into the second flank B1 shown as a broken line in Fig. 14. While keeping the rotation, and the contact with the work W, of the head grindstone G1 after the formation of the second flank B1, the CPU 65 drives the pulse motor Mp to be rotated when the pulse motor driving switch Sm2 is pushed by the operator. After the work W is rotated in $\theta b = 90°$ (in $\theta b = 75°$ from the position in the mode B1) from the standard angle position, the conical surface B2 shown in Fig. 15 is formed.

When the head grindstone turning off switch 59 is pushed (S17) after the second flank B1 and the conical surface B2 are formed as described above, the CPU 65 stops the rotation of the head grinstone G1 and turns off the work's rotation angle light Lb1 and the setting OK light Le which both have been on (S18), and then completes the cutting procedure for forming the second flank B1 and the conical surface B2.

After the second flank B1 and the conical surface B2 are formed on the work W as described above, the work W is rotated in $180°$ by pushing the pulse motor driving switch Smx, and then the same procedure as described above is performed. Accordingly, the other second flank B1 and the other conical surface B2 can be formed.

<A step for forming first flanks C>

When the mode selecting switch 57 is set at the mode C by the operator (S28), the CPU 65 reads

9

processing data for forming the first flank C out of the ROM 66, makes the work head's vertical position light La2, the grindstone shaft's rotation angle light Lc2, and the grindstone shaft's tilt angle light Ld2 all flash, and turns on the setting NO light Lf (S29). The operator, therefore, sees the lights La2, Lc2, and Ld2 flashing, and then can judge that it is necessary to move the work head 43 and to rotate and tilt the grindstone shaft 51.

When the work head's vertical postion detector 45 detects that the work head 43 is moved below in $\Delta C$ from said standard position manually or by the motor, the CPU 65 turns on the work head's vertical position light La2 according to this detection signal. When the grindstone shaft's rotation angle detector 53 detects that the grindstone shaft 51 is rotated to the left (to the right in 16° from the position in said mode B2) in 16° from said standard angle position, the CPU 65 turns on the grindstone shaft's rotation angle light Lc2 according to the detection signal. When the grindstone shaft's tilt angle detector 54 detects that the grindstone shaft 51 is tilted below in 15° (in 7° from the angle position $\theta d = 8°$ in said mode B1) from said standard angle position, the CPU 65 turns on the grindstone shaft's tilt angle light Ld2 according to this detection signal. When the work head's vertical position light La2, the grindstone shaft's rotation angle light Lc2, and the grindstone shaft's tilt angle light Ld2 are all turned on, the CPU 65 turns off the setting NO light Lf and turns on the setting OK light Le (S30 to S32), and then makes it possible to drive the grindstone driving motor Mg. The operator, thus, can confirm that the work W and the head grindstone G1 are set at appropriate positions.

When the head grindstone turning on switch 58 is pushed by the operator (S33), the CPU 65 rotates the head grindstone G1 (S34). The tip of the work W is, then, cut to be formed into the first flank C shown as a broken line in Fig. 15. When the head grindstone turning off switch 59 is pushed (S35) after the formation of this first flank C, the CPU 65 stops the rotation of the head grindstone G1 and turns off the work head's vertical position light La2, the grindstone shaft's rotation angle light Lc2, the grindstone shaft's tilt angle light Ld2, and the setting OK light Le which all have been on (S36), and then completes cutting and processing the first flank C.

When the first flank C is formed on the work W as described above, the work W is rotated in 180° by pushing the pulse motor driving switch Smx, and then the same procedure as described above is performed. Accordingly, the other first flank C can be formed.

<A step for forming chamfer stages D1 and D2>

The head grindstone G1 used in said modes A to C is replaced by the head grindstone G2 for a jump in order to form the chamfer stages D1 and D2. After the work head 43 is set at the standard position, and after the work W and the grindstone shaft 51 are set at the standard angle positions, the head grindstone G2 is brought into contact with the tip of the work W.

When the mode selecting switch 57 is set at the modes D1 and D2 by the operator (S37), the CPU 65 reads processing data for forming the chamfer stages D1 and D2 out of the ROM 66, makes the work head's vertical position light La3, the work's rotation angle light Lb2, the grindstone shaft's rotation angle light Lc3, and the grindstone shaft's tilt angle light Ld3 all flash, and turns on the setting NO light Lf (S38). The operator, thus, sees the lights La3, Lb2, Lc3, and Ld3 flashing, and can judge that it is necessary to move the work head 43, to rotate the work W, and to rotate and tilt the grindstone shaft 51.

When the pulse motor driving switch Sm3 is pushed by the operator, the CPU 65 drives the pulse motor Mp to rotate the work W. The work head 43 is moved in a predetermined distance, and the grindstone shaft 51 is rotated or tilted in a predetermined angle (S39). When the work head's vertical position detector 45 detects that the work head 43 is moved above in $\Delta D1$ from the standard position, the CPU 65 turns on the work head's vertical position light La3 according to this detection signal. When the work's rotation angle detector 46 detects that the work W is rotated in $\theta b = 45°$ from the standard angle position, the CPU 65 turns on the work's rotation angle light Lb2 according to the detection signal. When the grindstone shaft's rotation angle detector 53 detects that the grind shaft 51 is rotated right in 10° from the standard angle position, the CPU 65 turns on the grindstone shaft's rotation angle light Lc3 according to this detection signal. When the grindstone shaft's tilt angle detector 54 detects that the grindstone shaft 51 is tilted above in 10° from the standard angle position, the CPU 65 turns on the grindstone shaft's tilt angle light Ld3 according to the detection signal.

When the work head's vertical position light La3, the work's rotation angle light Lb3, the grindstone shaft's rotation angle light Lc3, and the grindstone shaft's tilt angle light Ld3 are all turned on, the CPU 65 turns off the setting NO light Lf and turns on the setting OK light Le (S40 and S41), and then makes it possible to drive the grindstone driving motor Mg. The operator, therefore, can confirm that the relative

10

position of the work W and the head grindstone G2 is set at an appropriate position.

When the head grindstone turning on switch 58 is pushed by the operator (S42), the CPU 65 rotates the head grindstone G2 (S43). The tip of the work W is, thus, cut by the head grindstone G2 to be formed into the chamfer stage D1 as shown as a broken line in Fig. 16. When the head grindstone turning off switch 59 is pushed (S44) after the formation of this chamfer stage D1, the CPU 65 stops the rotation of the head grindstone G2 and turns off the work head's vertical position light La3, the work rotation angle light Lb2, the grindstone shaft's rotation angle light Lc3, the grindstone shaft's tilt angle light Ld3, and the setting OK light Le which have been all on (S45), and then completes cutting and processing the chamfer stage D1.

When said light La3, Lb2, Lc3, and Ld3 are all turned off, the CPU 65 makes the work's rotation angle light Lb4 flash (S46). When the pulse motor driving switch Sm4 is pushed by the operator, the CPU 65 drives the pulse motor Mp to rotate the work W (S47). And then, when the work's rotation angle detector 46 detects that the work W is rotated in 90 ° (in further $\theta b = 45$° from the angle position in said mode D1) from the standard angle position (S48), the CPU 65 turns on the work's rotation angle light Lb3 according to the detection signal (S49). The operator, thus, can make it sure that the work W is rotated in a predetermined angle.

When the head grindstone turning on switch 58 is pushed by the operator (S50), the CPU 65 rotates the head grindstone G2 (S15). The tip of the work W is, thus, cut by the head grindstone G2 to be formed into the chamfer stage D2 as shown as a broken line in Fig. 16. When the head grindstone turning off switch 59 is pushed (S52) after the formation of this chamfer stage D2, the CPU 65 stops the rotation of the head grindstone G2 and turns off the work's rotation angle light Lb3 which has been on (S53), and then completes cutting and processing the chamfer stage D2.

After the chamfer stage D1 and D2 are formed on the work W as described above, the work W is rotated in 180° by pushing the pulse motor driving switch Smx, and the same procedure as described above is performed. Accordingly, the other chamfer stages D1 and D2 can be formed.

<A step for forming web thinnings E>

The head grindstone G2 used in said modes D1 and D2 is replaced by the web thinning grindstone G3 in order to form the web thinnings E. When the mode selecting switch 57 is set at the mode E by the operator (S54), the CPU 65 reads processing data for forming the web thinnings E out of ROM 66, makes the grindstone shaft's rotation angle light Lc4 flash, and turns on the setting NO light Lf (S55). The operator, thus, can see the light Lc4 flashing, and then can judge that it is necessary to rotate the grindstone shaft 51.

After the grindstone shaft 51 is rotated manually or by the motor (S56), and when the grindstone shaft's rotation angle detector 53 detects that the grindstone shaft 51 is rotated to the right in 90 ° (in 80 ° from the angle position in the mode D2) from the standard angle position, the CPU 65 turns on the grindstone shaft's rotation angle light Lc4 according to the detection signal. When the grindstone shaft's rotation angle light LC4 is turned on, the CPU 65 turns off the setting NO light Lf and turns on the setting OK light Le (S57 and S58).

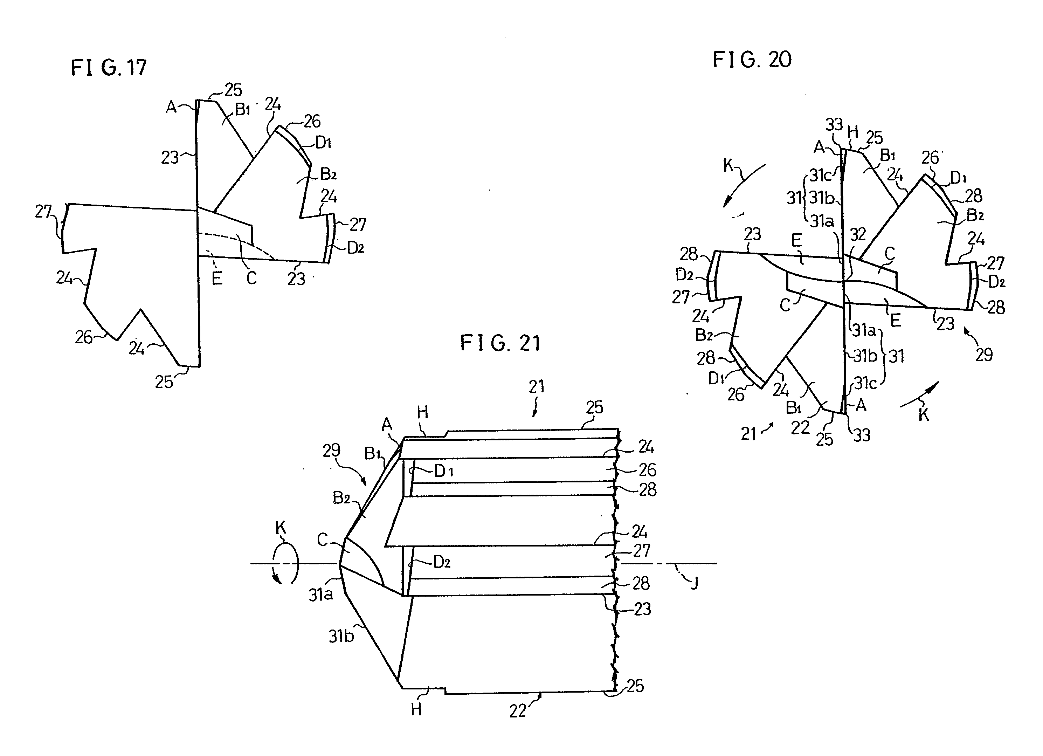

When the head grindstone turning on switch 58 is pushed by the operator (S59), the CPU 65 rotates the web thinning grindstone G3 (S60). The tip of the work W is, thus, cut by the web thinning grindstone G3 to be formed into the web thinning E as shown as a broken line in Fig. 17. When the head grindstone turning off switch 59 is pushed by the operator (S61) after the formation of this web thinning E, the CPU 65 stops the rotation of the web thinning grindstone G3 and turns off the grindstone shaft's rotation angle light Lc1 and the setting OK light Le which have been on (S62), and then completes the cutting and processing steps for forming the web thinning E.

When the web thinning E is formed on the work W as described above, the pulse motor driving switch Smx is pushed to rotate the work W in 180° and the same operation as described above is performed. Accordingly, the other web thinning E can be formed.

In the present embodiment, in case of forming a boring tool of a complecated shape such as a burnishing drill 21 or the like, a member which has to be adjusted can be known by seeing the conditions of the work head's vertical position lights La1 to La3, of the work's rotation angle lights Lb1 to Lb3, of the grindstone shaft's rotation angle lights Lc1 to Lc4, and of the grindstone shaft's tilt angle lights Ld1 to Ld3. The operator can be adjusting the positions of the grindstones G1 to G3 or of the work W until the lights La1 to La3, Lb1 to Lb3, Lc1 to Lc4, and Ld1 to Ld3 which have been flashing are turned on. The operator can know that adjusting the positions has been completed by seeing the setting OK light Le turned on. Consequently, it is easy to adjust the positions of the work W and of the grindstone G1 to G3.

The grindstones G1 to G3 are never rotated until said light La1 to La3, Lb1 to Lb3, Lc1 to Lc4, and Ld1 to Ld3 which have been flashing are turned on, and until the setting OK light Le is turned on, and only when the light Le is turned on, the rotation of the grindstones G1 to G3 is possible so that there might be no possibility that cutting is performed while the work W is in a wrong position. Censequently, a burnishing drill of a desirable shape can be surely manufactured.

In the forming apparatus of the present embodiment, only the function of indicating the relative positions of the work W and of the grindstones G1 to G3 is automatically controlled, and other functions are performed manually or by the motor, so that this forming apparatus can be made less expensive than a conventional NC grinding machine.

The present embodiment can be modified, for example, as described below.

(1) The present second embodiment can be embodied as an apparatus and a method for forming boring tools of complicated shapes such as a drill, a reamer, and so on other than a burnishing drill.

(2) The setting OK light Le and the setting NO light Lf in said second embodiment can be deleted.

(3) Three pieces of the grindstones G1 to G3 are used in said second embodiment, but a grindstone integrally formed of these three grindstones G1 to G3 can be used.

(4) The mounting member 50 and the grindstone driving motor Mg can be rotated in the direction of the arrow C in said second embodiment, but these can be unrotatable, and instead the work head 43 can be rotated.

(5) The work W can be moved vertically in said second embodiment, but the grindstones G1 to G3 can be moved vertically, or in short, when the gridstones G1 to G3 are tilted in the direction of the arrow d, any among the work W and the grindstones G1 to G3 can be moved vertically to make these grindstones G1 to G3 come to contact with the work W.

As many apparently widely different embodiments of this invention may be made without departing from the spirit and scope thereof, it is to be understood that the invention is not limited to the specific embodiments thereof except as defined in the appended claims.

## Claims

1. A method for forming boring tools wherein a work (W) of a cylindrical shape is rotated around its axial center and at least either said work (W) or grinding means (10) is moved in the axial direction of said work (W) while at least either said work (W) or said grinding means (10) is reciprocated in the diametral direction of said work (W) characterized by that said method for forming boring tools comprises;
a step for storing a relative moving distance of said work (W) and of said grinding means (10) in said diametral direction and a relative moving distance of said work (W) and of said grinding means (10) in said axial direction as moving distance data according to rotation angle positions of said work (W);
a step for rotating said work (W);
a step for detecting the rotation angle positions of said work (W);
and a step for moving said work and said grinding means relatively to each other accoridng to the moving distance data corresponding to said detected rotation angle positions of said work (W).

2. A method for forming boring tools according to claim 1 further comprising a step for judging if said work (W) and said grinding means (10) are moved relatively to each other in a predetemined distance in the longitudinal direction of said work (W) and completing formation of said work (W) by means of said grinding means (10) when said work (W) and said grinding means (10) are moved in said predetermined distance.

3. A method for forming boring tools according to claim 1 wherein said work (W) is rotated in plural stages and is turned in a predetermined angle at each stage, each of said moving distance data is set at each said predetermined angle, said work (W) and said grinding means (10) are moved relatively to each other according to said moving distance data corresponding to the predetermined angles while said work (W) is rotated in each predetermined angle.

4. A method for forming boring tools wherein relative positions of a work (W) and grinding means (G1 to G3) are changed in a predetermined order and a plurality of portions (A to E) of said work (W) are formed characterized by that said method for forming boring tools comprises:
a first step for storing relative positions, which respectively correspond to each of said plural portions (A to E) of said work (W), of said work (W) and of said grinding means (G1 to G3), as predetermined position data;
a second step for moving said work (W) and said grinding means (G1 to G3) relatively to each other;
a third step for outputting detected position data after successively detecting the relative positions of said work (W) and said grinding means (G1 to G3);

a fourth step for successively indicating relationships between said predetermined position data and said detected position data;

and a fifth step for driving said grinding means (G1 to G3) when said predetermined position data and said detected position data correspond with each other.

5. A method for forming boring tools according to claim 4 further comprising a sixth step for controlling said grinding means (G1 to G3) so that said grinding means (G1 to G3) can not be driven when said predetermined position data and said detected position data do not correspond with each other and said grinding means (G1 to G3) can be driven when said predetermined position data and said detection position data correspond with each other.

6. A method for forming boring tools according to claim 5 wherein a state in which said grinding means (G1 to G3) can not be driven and a state in which said grinding means (G1 to G3) can be driven are respectively indicated in said sixth step.

7. A method for forming boring tools according to claim 4 wherein said work (W) is formed into different shapes at each of said plural portions (A to E), further comprising a seventh step for storing processing data so as to form each of said plural portions (A to E), so that each said portion (A to E) might be formed according to said processing data when said predetermined position data and said detected position data correspond with each other in said fifth step.

8. An apparatus for forming boring tools wherein relative postions of a work (W) and of grinding means (G1 to G3) are changed in a predetermined order to form a plurality of portions (A to E) of said work (W) characterized by that said apparatus comprises;

storing means (66) for storing relative positions, which respectively correspond to each of said plural portions (A to E) of said work (W), of said work (W) and of said grinding means (G1 to G3) as predetermined position data;

moving means (41, 42, 47, 49, 50) for moving said work (W) and said grinding means (G1 to G3) relatively to each other;

detecting means (45, 46, 53, 54) for successively detecting said relative positions of said work (W) and of said grinding means (G1 to G3) and outputting detected position data;

and indicating means (La1 to Lax, Lb1 to Lbx, Lc1 to Lcx, and Ld1 to Ldx) for successively indicating relationships between said predetemined position data and said detected position data.

9. An apparatus for forming boring tools according to claim 8 further comprising controlling means (65) for controlling said grinding means (G1 to G3) so that said grinding means (G1 to G3) can not be driven when said predetermined position data and said detected position data do not correspond with each other and said grinding means (G1 to G3) can be driven when said predetermined position data and said detected position data correspond with each other.

10. An apparatus for forming boring tools according to claim 8 further comprising completion controlling means (45) for keep flashing said indicating menas (La1 to Lax, Lb1 to Lbx, Lc1 to Lcx, and Ld1 to Ldx) until said predetermined positiond ata and said detected position data come to correspond with each other.

11. An apparatus for forming boring tools according to claim 8 wherein said work (W) is formed into different shapes at each of said plural portions (A to E), further comprising second storing means (46) for storing processing data so as to form each of said plural portions (A to E) and mode selecting means (57) for reading said processing data out of said second storing means (46) according to a forming operation of each of said portions (A to E).

FIG. 1

FIG. 2

FIG.3

FIG.4

FIG. 5

FIG. 6

FIG.7

```
                    ┌─────────────┐
                    │    START    │
                    └──────┬──────┘
                           │◄──────────────────────────┐
STEP1                      ▼◄──────────────────┐       │
              ┌────────────────────────┐       │       │
              │       Z = 0            │       │       │
              │       X = 0.10         │       │       │
              └───────────┬────────────┘       │       │
STEP2                     ▼                     │       │
                    ╱─────────────╲     No      │       │
              ╱─── Is Work Rota- ───╲──────────┘       │
              ╲──── ted  40.202° ───╱                   │
                    ╲─────┬───────╱                     │
STEP3            Yes      ▼◄──────────────────┐         │
              ┌────────────────────────┐      │         │
              │     Z=-0.02            │      │         │
              │     X= 0.05            │      │         │
              └───────────┬────────────┘      │         │
STEP4                     ▼                    │         │
                    ╱─────────────╲    No      │         │
              ╱─── Is  Work      ───╲─────────┘         │
              ╲─── Rotated 20.101° ─╱                    │
                    ╲─────┬───────╱                      │
STEP5            Yes      ▼◄──────────────────┐          │
              ┌────────────────────────┐      │          │
              │       Z=0             │      │          │
              │       X= 0.10         │      │          │
              └───────────┬────────────┘      │          │
STEP6                     ▼                    │          │
                    ╱─────────────╲    No      │          │
              ╱─── Is  Work      ───╲─────────┘          │
              ╲─── Rotated 40.202° ─╱                     │
                    ╲─────┬───────╱                       │
STEP7            Yes      ▼◄──────────────────┐           │
              ┌────────────────────────┐      │           │
              │     Z=0.02            │      │           │
              │     X=0.05            │      │           │
              └───────────┬────────────┘      │           │
STEP8                     ▼                    │           │
                    ╱─────────────╲    No      │           │
              ╱─── Is  Work      ───╲─────────┘           │
              ╲─── Rotated 20.101° ─╱                      │
                    ╲─────┬───────╱                        │
                 Yes      ▼                                │
STEP9               ╱─────────────╲    No                  │
              ╱─── Is Work Moved  ───╲───────────────────┘
              ╲─── Predetermined  ───╱
              ╲──── Amount ? ───────╱
                    ╲─────┬───────╱
                 Yes      ▼
STEP10        ┌────────────────────────┐
              │ Grindstone Is Detac-   │
              │ hed From  Work         │
              └───────────┬────────────┘
                          ▼
                    ┌─────────────┐
                    │   E N D     │
                    └─────────────┘
```

FIG. 8

FIG. 9

# FIG. 10

Work Head Vertical Position (a)

A  C  D₁
○ ○ ○ ○ ○ ○ ○ ○ ○ ○ ○ ○ ○ ○ ○ ○ ○ ○ ○ ○ ○
La₁ La₂ La₃                                                                    Lax

Grindstone Shaft Rotation Angle (θc)          Work Rotation Angle (θb)

A   C   D₁   E                                  B₁  D₁  D₂                      Pulse Motor Drive
○  ○  ○  ○  ○  ○                              ○ ○ ○ ○                      B₁    B₂    D₁
Lc₁ Lc₂ Lc₃ Lc₄      Lcx                      Lb₁ Lb₂ Lb₃                  ◎    ◎    ◎    ◎    ◎    ◎    ◎

Grindstone Shaft                                ○ ○ ○ ○                      Sₘ₁  Sₘ₂  Sₘ₃                  Sₘₓ
Tilt Angle (θd)                                          Lbx

A   C   D₁                                                                     Head Grindstone          Wed Thinning
○  ○  ○  ○                                                                   ON    OFF                ON    OFF
Ld₁ Ld₂ Ld₃  Ldx                    Mode Selection                       ◎    ◎                ◎    ◎

                                              C●    ●D₁,D₂
Setting        Setting                                                         58    59                60    61
OK            NO                    B₁,B₂●              ●E
○              ○                                                             Emergency Stop
Le            Lf                    A●          ○     ●
                                                    57                        ◎

                                                                              64

EP 0 358 207 A2

FIG.11

66 ~ | ROM |          | RAM | ~67

65

68

| Work Head Vertical Position Detector |
| 45 |

| Work Rotation Angle Detector |
| 46 |

| Grindstone Shaft Rotation Angle Detector |
| 53 |

| Grindstone Tilt Angle Detector |
| 54 |

| Mode Selecting Switches |
| 57 |

| Pulse Motor Driving Switches |
| SM₁ ~ SM₇ |

| Head Grindstone Turning ON Switch |
| 58 |

| Head Grindstone Turning OFF Switch |
| 59 |

| Web Thinning Grindstone Turning ON Switch |
| 60 |

| Wed Thinning Grindstone Turning OFF Switch |
| 61 |

| Emergency Stop Switch |
| 64 |

C P U

Indication Drive Controlling Circuit

| Work Head Vertical Position Lights |
| La₁ ~ Lax |

| Work Rotation Angle Lights |
| Lb₁ ~ Lbx |

| Grindstone Shaft Rotation Angle Lights |
| Lc₁ ~ Lcx |

| Grindstone Shaft Tilt Angle Lights |
| Ld₁ ~ Ldx |

| Setting OK Light |
| Le |

| Setting NO Light |
| Lf |

| Motor Driving Circuit |  | Pulse Motor |
| 69 |  | Mp |

| Motor Driving Circuit |  | Grindstone Driving Motor |
| 70 |  | Mg |

EP 0 358 207 A2

F I G. 12

F I G. 13

F I G. 14

F I G. 15

F I G. 16

FIG.17

FIG. 20

FIG. 21

EP 0 358 207 A2

# F I G. 18a

```
                    ┌─────────────┐
                    │   S T A R T │
                    └─────────────┘
                           │
        STEP1              ▼
              ╱◇╲  Mode  A ?  ╲──── No
              ╲◇╱
        STEP2    │ Yes
              ┌──────────────────────┐
              │ Flash Lights La1, Lc1,│
              │ Ld1,  Turn On Light  │
              │ Lf.                  │
              └──────────────────────┘
        STEP3    │
              ┌──────────────────────┐
              │ Move Wark Head, Rota- │
              │ te Grindstone Shaft,  │
              │ Tilt Grindstone Shaft.│
              └──────────────────────┘
        STEP4    │
              ╱◇╲  a = -ΔA
                   θc = 32°
                   θd = 8°     ╲──── No
              ╲◇╱
        STEP5    │ Yes
              ┌──────────────────────┐
              │ Turn On Lights La1,   │
              │ Lc1, Ld1, Turn Off Lig-│
              │ ht Lf, Turn On Light  │
              │ Le.                   │
              └──────────────────────┘
        STEP6    │
              ╱◇╲  Is
                   Grindstone
                   Turning On Switch  ╲──── No
                   Pushed ?
              ╲◇╱
        STEP7    │ Yes
              ┌──────────────────────┐
              │ Rotate Head          │
              │ Grindstone.          │
              └──────────────────────┘
        STEP8    │
              ╱◇╲  Is
                   Grindstone
                   Turning Off Switch ╲──── No
                   Pushed ?
              ╲◇╱
        STEP9    │ Yes
              ┌──────────────────────┐
              │ Stop Head Grindstone, │
              │ Turn Off  Lights.     │
              └──────────────────────┘
```

```
        STEP10
              ╱◇╲  Mode
                   B1 , B2  ?    ╲──── No
              ╲◇╱
        STEP11   │ Yes
              ┌──────────────────────┐
              │ Flash Light Lb1,      │
              │ Turn On Light Lf.     │
              └──────────────────────┘
        STEP12   │
              ┌──────────────────────┐
              │ Rotate Work.         │
              └──────────────────────┘
        STEP13   │
              ╱◇╲  θb = 15°    ╲──── No
              ╲◇╱
        STEP14   │ Yes
              ┌──────────────────────┐
              │ Turn On Lights Lb1,   │
              │ Le, Turn Off Light    │
              │ Lf.                   │
              └──────────────────────┘
        STEP15   │
              ╱◇╲  Is
                   Grindstone
                   Turning On Swit-   ╲──── No
                   ch Pushed ?
              ╲◇╱
        STEP16   │ Yes
              ┌──────────────────────┐
              │ Rotate Head          │
              │ Grindstone.          │
              └──────────────────────┘
        STEP17   │
              ╱◇╲  Is
                   Grindstone
                   Turning Off·Switch ╲──── No
                   Pushed ?
              ╲◇╱
        STEP18   │ Yes
              ┌──────────────────────┐
              │ Stop Head Grindstone  │
              │ Turn Off  Lights.     │
              └──────────────────────┘
                       │
                       ▼
                      (A)
```

# F I G. 18b

A

STEP28 — Mode C ? — No

Yes

STEP29 — Flash Lights La2, Lc2, Ld2, Turn On Light Lf.

STEP30 — Move Work Head, Rotate Grindstone Shaft, Tilt Grindstone Shaft.

STEP31 — $a = -\Delta C$ $\theta c = 16°$ $\theta d = 7°$ — No

Yes

STEP32 — Turn On Lights La2, Lc2, Ld2, Turn Off Light Lf, Turn On Light Le.

STEP33 — Is Grindstone Turning On Switch Pushed ? — No

Yes

STEP34 — Rotate Head Grindstone

STEP35 — Is Grindstone Turning Off Switch Pushed ? — No

Yes

STEP36 — Stop Head Grindstone, Turn Off Lights.

STEP37 — Mode D1, D2 ? — No

Yes

STEP38 — Flash Lights La3, Lb2, Lc3, Ld3, Turn On Light Lf.

STEP39 — Move Work Head, Rotate Work, Rotate And Tilt Grindstone Shaft.

STEP40 — $a = \Delta D_1$ $\theta b = 45°$ $\theta c = 10°$ $\theta d = 10°$ — No

Yes

STEP41 — Turn On Lights La3, Lb2, Lc3, Ld3, Turn Off Light Lf, Turn On Light Le.

STEP42 — Is Grindstone Turning On Switch Pushed ? — No

Yes

STEP43 — Rotate Head Grindstone

STEP44 — Is Grindstone Turning Off Switch Pushed ? — No

Yes

B

# FIG. 18c

B

STEP45
Stop Head Grindstone, Turn Off Lights.

STEP46
Flash Light Lb3.

STEP47
Rotate Work.

STEP48
$\theta c = 45°$ — No

Yes

STEP49
Turn On Light Lb3.

STEP50
Is Grindstone Turning On Switch Pushed ? — No

Yes

STEP51
Rotate Head Grindstone

STEP52
Is Grindstone Turning Off Switch Pushed ? — No

Yes

STEP53
Stop Head Grindstone, Turn Off Lights.

STEP54
Mode E ? — No

Yes

STEP55
Flash Light Lc4, Turn On Light Lf.

STEP56
Rotate Grindstone Shaft.

STEP57
$\theta c = 90°$ — No

Yes

STEP58
Turn On Light Lc4, Turn Off Light Lf, Turn On Light Le.

STEP59
Is Grindstone Turning On Switch Pushed ? — No

Yes

STEP60
Rotate Web Thinning Grindstone.

STEP61
Is Grindstone Turning Off Switch Pushed ? — No

Yes

STEP62
Stop Web Thinning Grindstone, Turn Off Lights.

END

## FIG. 19a

| Mode | Work Head Vertical Movement $a$ | Work Rotation $\theta b$ | Grindstone Shaft Tilt $\theta d$ | Grindston Shaft Rotation $\theta c$ |
|---|---|---|---|---|
| A | | | | |
| B₁ | | | | |
| B₂ | | | | |

EP 0 358 207 A2

FIG. 19b